# EUROPÄISCHE PATENTSCHRIFT

(11) **EP 0 876 273 B1**
(45) Veröffentlichungstag und Bekanntmachung des Hinweises auf die Patenterteilung: **03.05.2000**
(21) Anmeldenummer: 97902175.5
(22) Anmeldetag: 16.01.1997
(51) Int. Cl.: B60T 13/14, B60T 8/40

(54) **BREMSDRUCKSTEUERANLAGEN**
BRAKE PRESSURE CONTROL DEVICES
DISPOSITIFS DE REGULATION DE LA PRESSION DE FREINAGE

(30) Priorität: 24.01.1996 DE 19602363
(43) Veröffentlichungstag der Anmeldung: 11.11.1998
(73) Patentinhaber: Continental Teves AG & Co. oHG, 60488 Frankfurt (DE)
(72) Erfinder: KOHL, Andreas, D-55126 Mainz (DE)
(86) Internationale Anmeldenummer: EP9700179
(87) Internationale Veröffentlichungsnummer: WO9727093

(56) Entgegenhaltungen:
- EP-A- 0 313 292
- WO-A-95/01897
- DE-A- 3 819 490
- DE-A- 3 902 131
- DE-C- 4 022 407
- US-A- 5 248 189
- US-A- 5 277 483

## Beschreibung

Die Erfindung bezieht sich auf Bremsdrucksteueranlagen gemäß dem Oberbegriff des Anspruchs 1 wie z.B. aus US-A-5 248 189.

Typischerweise handelt es sich bei einer derartigen Bremsdrucksteueranlage um ein Antiblockiersystem. Es sollen aber auch alle anderen Steuerungssysteme umfaßt werden, bei denen der Druck in der Radbremse unabhängig von der Pedalkraft eingestellt werden kann. Eine Art eines Bremsdrucksteuerungssystems nennt sich Rückförderprinzip. Ein derartiges System sieht ein Einlaßventil vor, daß die Verbindung zwischen dem Hauptzylinder und den Radbremszylindern sperren kann sowie ein Auslaßventil, daß den Radbremszylinder mit einem Niederdruckspeicher verbindet. Mit einer Rückförderpumpe wird das in den Niederdruckspeicher abgelassene Druckmittel in den Hauptzylinder zurückgefördert.

Der Bremsdruck kann nun durch Öffnen und Schließen des Einlaß- und des Auslaßventils nach den Vorgaben einer elektronischen Steuerung geregelt werden.

Nach Abschluß einer derartigen Regelung verbleibt in der Regel noch Druckmittel im Niederdruckspeicher. Dieses muß in einer sogenannten Nachlaufphase oder Entleerungsphase entnommen und in den Vorratsbehälter des Systems zurückgefördert werden. Typicherweise sieht daher die Steuerung des derartigen Systems nach Beendigung einer Bremsung, was durch eine Überwachung des Bremslichtschalters festgestellt werden kann, ein Nachlaufen des Motors, der die Rückförderpumpe antreibt, für einen gewissen Zeitraum vor.

Der Zeitraum ist so bemessen, daß auch ein vollständig gefüllter Niederdruckspeicher auf jeden Fall sicher entleert wird. Dies läßt sich zwar schaltungstechnisch einfach realisieren, hat aber den Nachteil, daß bei jeder Bremsung, bei der eine Bremsdruckregelung aktiviert worden ist, der Motor bzw. die Pumpe auch nach Beendigung der Regelung für einen relativ längeren Zeitraum noch Geräusche verursacht.

Die Erfindung beruht daher auf der Aufgabe, die Geräusche möglichst zu reduzieren. Es wird daher vorgeschlagen, die Drehzahl der Pumpe in der Entleerungsphase zu überwachen und aufgrund bestimmter Kriterien bezogen auf die Drehzahl, die Pumpe abzuschalten und die Entleerungsphase zu beenden.

Dies ermöglicht es, die Entleerungszeit dem tatsächlichen Füllgrad des Niederdruckspeichers anzupassen. In der Regel wird auf diese Weise die Entleerungszeit verkürzt, so daß auch die Geräuschbelästigung minimiert wird.

Am einfachsten läßt sich eine derartige Überwachung realisieren, indem der Motor, der die Pumpe antreibt, in der Entleerungsphase pulsweitenmoduliert angesteuert wird, wobei in den Abschnitten des Steuerungssignals für die Pumpe, in denen keine Spannung an dem Motor anliegt, eine Drehzahlmessung erfolgt.

Eine einfache Größe, die die Drehzahl des Motors und der damit angeschlossenen Pumpe wiedergibt, ist die Messung der elektromotorischen Gegenkraft.

Als Kriterium für ein Abschalten der Pumpe kann entweder die Drehzahl selbst herangezogen werden, wobei bei Überschreitung einer gewissen Drehzahl die Entleerungsphase durch Abschalten des Motors beendet wird.

Es kann aber auch die Drehzahlerhöhung von Meßpunkt zu Meßpunkt herangezogen werden, wobei ebenfalls nach Überschreitung einer gewissen Schwelle, die Entleerungsphase beendet wird.

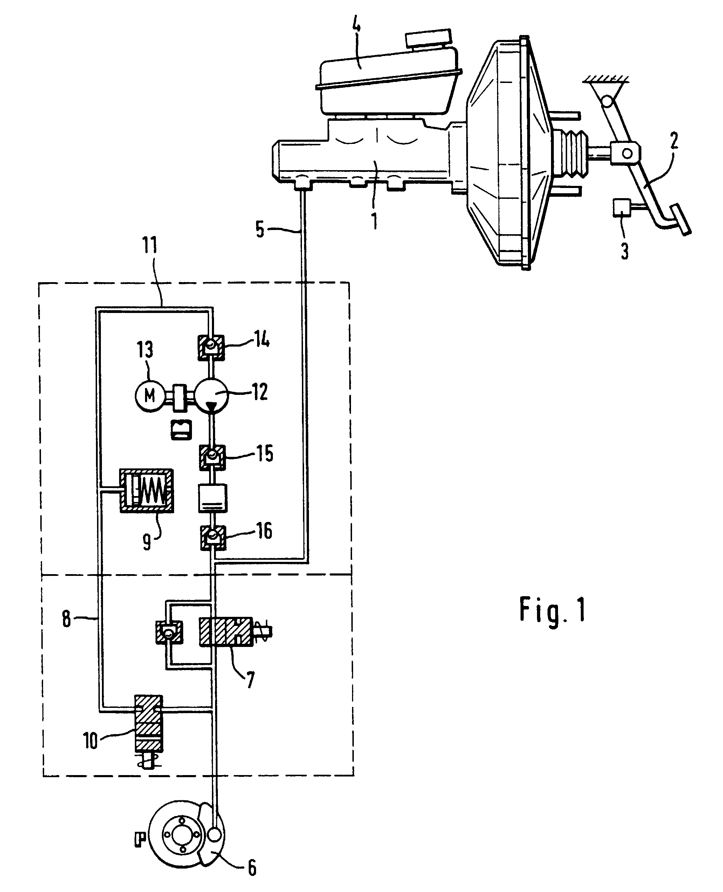

Die Erfindung soll im folgenden anhand eines Ausführungsbeispiels näher erläutert werden. Die Fig. 1 zeigt die Bremsanlage eines Fahrzeuges, bei der lediglich ein Bremskreis dargestellt ist. Die weiteren Bremskreise sind entsprechend den bekannten Regeln für den Aufbau von Bremskreisen ausgebildet.

Die Anlage besteht aus einem Hauptzylinder 1, der mittels eines Pedals 2 betätigt wird. An dem Pedal 2 ist ein Bremslichtschalter 3 vorgesehen, dessen Schaltzustand Aufschluß darüber gibt, ob das Pedal betätigt ist oder nicht.

Mit dem Hauptzylinder 1 ist ein Vorratsbehälter 4 verbunden, der bei nicht betätigtem Bremspedal mit den Arbeitskammern des Hauptzylinders und damit mit den angeschlossenen Bremskreisen verbunden ist. Ein Bremskreis besteht aus einer Bremsleitung 5, die eine Arbeitskammer des Hauptzylinders mit einer Radbremse 6 verbindet. In diese Leitung eingefügt ist ein Einlaßventil 7, daß elektromagnetisch betätigt wird und im stromlosen Zustand die Bremsleitung offenhält.

Über eine Rücklaufleitung 8 ist die Radbremse 6 mit einem Niederdruckspeicher 9 verbunden, wobei in die Rücklaufleitung ein Auslaßventil 10 eingefügt ist. Dieses Auslaßventil ist stromlos geschlossen.

Der Niederdruckspeicher 9 wiederum ist über eine Saugleitung 11 mit der Saugseite einer Pumpe 12 verbunden, die von einem Motor 13 angetrieben wird. Die Druckseite der Pumpe 12 ist über ein Rückschlagventil 16 mit der Bremsleitung 5 zwischen dem Hauptzylinder 1 und dem Einlaßventil 7 verbunden.

Der Öffnungsdruck des Saugventils 14 der Pumpe beträgt ca. 1,1 bar, der Öffnungsdruck des Druckventils 15 der Pumpe beträgt ca. 5,5 bar.

Mit Betätigen des Pedals wird in dem Bremskreis ein Druck aufgebaut, wobei der Druck in der Arbeitskammer des Hauptzylinders 1 dem Druck in der Radbremse 6 entspricht. Um diesen unabhängig vom Druck im Hauptzylinder einstellen zu können, wird das Ein- bzw. Auslaßventil 7,10 angesteuert. Zum Druckabsenken wird das Einlaßventil geschlossen und das Auslaßventil geöffnet, zum Druckhalten werden beide Ventile geschlossen und zur erneuten Druckerhöhung das Auslaßventil geschlossen und das Einlaßventil geöffnet.

In einer Druckabbauphase fließt Druckmittel aus der Radbremse 6 in den Niederdruckspeicher 9 und wird von dort mittels der Pumpe 12 in den Hauptzylinder 1 zurückgefördert.

Nun kann der Fall eintreten, daß nach Beendigung einer Bremsung noch Druckmittel im Niederdruckspeicher verbleibt. Dieses Druckmittel muß entfernt werden, damit bei einer erneuten Bremsdruckregelung der Niederdruckspeicher bereit ist, in einer Druckabbauphase Druckmittel aufzunehmen. Dazu wird vorgeschlagen, daß die Pumpe 13 nach Beendigung einer Bremsdrucksteuerung spätestens aber dann, wenn die Bremse wieder gelöst ist, was über den Bremslichtschalter 3 festgestellt werden kann, die Pumpe pulsweitenmoduliert angesteuert wird. Die Pulsweitenmodulation erfolgt in einem festgelegten Takt, wobei in den Phasen, in denen keine Spannung am Motor anliegt, die elektromotorische Gegenkraft des Motors gemessen wird. Diese ist ein Maß für die Drehzahl des Motors und der angeschlossenen Pumpe.

Die Drehzahl der Pumpe wird insbesondere bestimmt durch den Öffnungsdruck des Druckventils 15, d. h. zumindest so lange noch Druckmittel vorliegt, daß aus dem Niederdruckspeicher 9 zur Saugseite der Pumpe 12 gedrückt wird.

Sobald kein Druckmittel mehr an der Saugseite der Pumpe ansteht, läuft die Pumpe leer, wodurch sich die Drehzahl schlagartig erhöht. Sobald dies festgestellt wird, wird die Entleerungsphase beendet. Die Dauer der Entleerungsphase bestimmt sich auf diese Weise durch den Füllgrad des Niederdruckspeichers, der nach der Beendigung einer Bremsdruckregelung vorliegt.

Im allgemeinen ist dieser gering, so daß nur mit kurzen Entleerungsphasen zu rechnen ist.

Das Einlaßventil kann in der Entleerungsphase offen bleiben. In einigen Fällen kann es empfehlenswert sein, das Einlaßventil zu schließen, damit das Druckmittel, daß von der Pumpe in die Bremsleitung 5 gefördert wird, nicht zur Radbremse gelangt, sondern auf jeden Fall in den Vorratsbehälter 4 über die bei gelöstem Pedal offene Verbindung zwischen Hauptzylinder und dem Vorratsbehälter 4.

## Patentansprüche

1. Bremsdrucksteueranlagen mit einem Hauptzylinder (1), der über eine Bremsleitung (5) mit mindestens einer Radbremse verbunden ist, so daß mit Betätigung des Hauptzylinders ein Bremsdruck aufgebaut wird, mit einem Niederdruckspeicher (9), in den zur Reduzierung des Drucks in der Radbremse (6) Druckmittel abgelassen wird, mit einer Pumpe (12), die mit ihrer Saugseite an den Niederdruckspeicher (9) und mit ihrer Druckseite an die Bremsleitung (5) anschließt, mit einer Einrichtung (3) zur Erfassung des Betätigungszustandes des Hauptzylinders (1) mit einer Einrichtung, mit der bei gelöstem Hauptzylinder und nach einer erfolgten Bremsdrucksteuerung bzw. -regelung eine Ansteuerung der Pumpe (12) zur Entleerung des Niederdruckspeichers (9) erfolgt, dadurch **gekennzeichnet,** daß in der Entleerungsphase die Drehzahl der Pumpe (12) überwacht wird, und aufgrund des Drehzahlsignals die Entleerungsphase durch Abschalten der Pumpe (12) beendet wird.

2. Bremsdrucksteueranlagen nach Anspruch 1, dadurch **gekennzeichnet,** daß die Pumpe (12) von einem Elektromotor (13) angetrieben wird, und daß der Elektromotor (13) in der Entleerungsphase pulsweitenmoduliert angesteuert wird, wobei in den Abschnitten des Steuersignals, in denen keine Spannung an den Motor anliegt, eine Drehzahlmessung erfolgt.

3. Bremsdrucksteueranlagen nach Anspruch 2, dadurch **gekennzeichnet,** daß zur Drehzahlmessung die elektromotorische Gegenkraft des Motors 13 herangezogen wird.

4. Bremsdrucksteueranlage nach einem der vorhergehenden Ansprüche, dadurch **gekennzeichnet**, daß die Entleerungsphase durch Abschalten des Motors (13) beendet wird, sobald die Drehzahl über einem bestimmten Wert liegt.

5. Bremsdrucksteuersystem nach einem der Ansprüche 1 bis 4, dadurch **gekennzeichnet,** daß die Beendigung der Entleerungsphase durch Abschalten des Elektromotors (13) erfolgt, sobald die Drehzahländerung von Meßpunkt zu Meßpunkt über einem gewissen Wert liegt.

## Claims

1. Brake pressure control systems including a master cylinder (1) which is connected by way of a brake line (5) to at least one wheel brake so that brake pressure is built up when the master cylinder is operated, a low pressure accumulator (9) into which pressure fluid is discharged for reducing the pressure in the wheel brake (6), a pump (12) which is connected with its suction side to the low pressure accumulator (9) and with its pressure side to the brake line (5), a device (3) for sensing the actuating condition of the master cylinder (1) which device is used to actuate the pump (12) for emptying the low pressure accumulator (9) when the master cylinder is released and after brake pressure control has taken place,
**characterized** in that the rotational speed of the pump (12) is monitored in the emptying period, and the emptying period is terminated on command of the rotational speed signal by disconnection of the pump (12).

2. Brake pressure control systems as claimed in claim 1,
**characterized** in that the pump (12) is driven by an electric motor (13), and in that the electric motor (13) is controlled by pulse-width modulation in the emptying period, and the rotational speed is measured in the sections of the control signal where no voltage is applied to the motor.

3. Brake pressure control systems as claimed in claim 2,
**characterized** in that the electromotive counterforce of the motor (13) is taken into account in the rotational speed measurement.

4. Brake pressure control system as claimed in any one of the preceding claims,
**characterized** in that the emptying period is terminated by deactivation of the motor (13) as soon as the rotational speed exceeds a determined value.

5. Brake pressure control system as claimed in any one of claims 1 to 4,
**characterized** in that the emptying period is terminated by deactivation of the electric motor (13) as soon as the rotational speed variation from measuring point to measuring point exceeds a determined value.

## Revendications

1. Dispositifs de régulation de la pression de freinage, comprenant un maître-cylindre (1) relié à au moins un frein de roue par l'intermédiaire d'une conduite de frein (5), de sorte qu'avec l'actionnement du maître-cylindre de frein, on crée une pression de freinage, comprenant un accumulateur basse pression (9), dans lequel on évacue du fluide sous pression en vue de diminuer la pression régnant dans le frein de roue (6), comprenant une pompe (12) dont le côté aspiration est relié à l'accumulateur basse pression (9) et dont le côté refoulement est raccordé à la conduite de frein (5), comprenant un dispositif (3) de détection de l'état d'actionnement du maître-cylindre (1) incluant un dispositif à l'aide duquel, lorsque le maître-cylindre est relâché, après la fin d'une modulation ou régulation de la pression de freinage, on effectue un pilotage de la pompe (12) de manière à vidanger l'accumulateur basse pression (9), caractérisés en ce que le régime de la pompe (12) est surveillé pendant la phase de vidange, et que la phase de vidange est terminée, par coupure de la pompe (12), en fonction du signal de régime.

2. Dispositifs de régulation de la pression de freinage selon la revendication 1, caractérisés en ce que la pompe (12) est mue par un moteur électrique (13), et en ce que le moteur électrique (13) est piloté par modulation de la durée d'impulsion pendant la phase de vidange, une mesure du régime étant effectuée durant les parties du signal de commande pendant lesquelles aucune tension n'est appliquée au moteur.

3. Dispositifs de régulation de la pression de freinage selon la revendication 2, caractérisés en ce que, pour mesurer le régime, on met à profit la force contre-électromotrice du moteur (13).

4. Dispositifs de régulation de la pression de freinage selon l'une des revendications précédentes, caractérisés en ce que la phase de vidange est terminée par coupure du moteur (13) dès que le régime dépasse une certaine valeur.

5. Dispositifs de régulation de la pression de freinage selon l'une des revendications 1 à 4, caractérisés en ce que l'arrêt de la phase de vidange par coupure du moteur électrique (13) intervient dès que la variation du régime d'un point de mesure à l'autre dépasse une certaine valeur.
